# EUROPEAN PATENT APPLICATION

(11) **EP 2 763 419 A1**
(43) Date of publication of application: **06.08.2014**
(21) Application number: 13305140.9
(22) Date of filing: 05.02.2013
(51) Int. Cl.: H04N 13/04

(54) **View supply for autostereoscopic display**

(71) Applicant: ST-Ericsson SA, 1228 Plan-les-Ouates (CH); Institut Mines-Telecom, 75013 Paris (FR)
(72) Inventor: Bourge, Arnaud, 75005 PARIS (FR); Mathieu, Yves, 91330 YERRES (FR)
(74) Representative: Cabinet Plasseraud

(57) **Abstract**

A method for supplying views respectively to several viewing units viewing simultaneously a same autostereoscopic display unit, avoids view inversion and view blending for each viewing unit. A view mapper and a view multiplexer are implemented, so as to assign each view to pixels of the display unit which are actually viewed by only one viewing unit. The method is useful for three-dimensional stereoscopic rendering and for multi-viewer display.

## Description

The invention relates to a method for supplying views to an autostereoscopic display unit, and also to an autostereoscopic display device which is adapted for implementing such method.

### -- BACKGROUND OF THE INVENTION --

Autostereoscopic display units can in particular allow viewers to experience three-dimensional stereoscopic rendering without wearing special eyeglasses. Separation between views which are intended respectively to the left eye and the right eye of one viewer is achieved at the display unit itself instead of eyeglasses worn by the viewer. The separation at the display unit is based on directivity of the light emitted for displaying each view: light forming a view which is intended to the left eye is emitted in the direction of this left eye, and the same for the right eye so as to form two separated viewing channels.

Two main types of the existing autostereoscopic display units are based on implementing a parallax barrier or a lenticular sheet. Both are arranged in front of the display panel. The parallax barrier is comprised of a mask with apertures which allow the light emitted by alternate columns of the display panel to propagate towards horizontally-restricted viewing zones. The lenticular sheet is comprised of an array of cylindrical lenses oriented vertically, and which direct the light originating from alternate pixel columns also towards horizontally-restricted viewing zones.

But such channel separation implementations are actually efficient only for a limited viewing range within the whole space available in front of the display unit. Put another way, the viewer's left eye may see the view intended to the right eye and the viewer's right eye may also see the view intended to the left eye for some locations of the wearer's eyes other than those selected initially when designing the autostereoscopic operation. Each eye may also see a blend of both views intended respectively to the left and right eyes for still other eye locations. Actually such blend appears as vertical strips each comprised of portions of the views intended to one eye or the other, and alternating between adjacent strips.

Therefore, one object of the present invention is to propose an improved implementation of autostereoscopic display, which increases the position ranges of viewing units such as both eyes of a viewer, where correct viewing is obtained.

A further object of the invention is to minimize the hardware which is required additionally for achieving such improvement.

### -- SUMMARY OF THE INVENTION --

For obtaining these objects or others, the present invention proposes a new method for supplying views which are intended respectively to one or several viewing units viewing simultaneously a same autostereoscopic display unit. This method comprises the following steps:
/1/ determining current respective three-dimensional positions of the viewing units with respect to the display unit;
/2/ for each viewing unit and based on its three-dimensional position, determining a view map containing pixels of the display unit which are viewed by this viewing unit;
/3/ collecting one first view intended to a first one of the viewing units and one second view intended to a second one of the viewing units, first and second views to be displayed simultaneously and each being comprised of display values respectively for at least some of the pixels of the display unit;
/4/ multiplexing the first view and the second view so that the first view is assigned to the view map determined for the first viewing unit and the second view is assigned to the view map determined for the second viewing unit; and
/5/ using the display unit, displaying simultaneously a first position-adapted view comprised of the first view assigned to the view map determined for the first viewing unit, together with a second position-adapted view comprised of the second view assigned to the view map determined for the second viewing unit.

Thus, according to the invention, the first and second views are multiplexed in a pixel-wise manner depending on the position of each of the viewing units in the free space in front of the display unit. The view-mapping also depends on physical and optical properties of the display unit. The view maps are determined so that each viewing unit actually sees only the pixels of the corresponding view map. This results in extended space ranges for the positions of the viewing units in front of the display unit, where correct and comfortable viewing of the autostereoscopic display is obtained, without view inversion or blending.

First implementations of the invention may relate to three-dimensional stereoscopic rendering. The first and second viewing units are then left and right eyes of one and same viewer, and the views collected in step /3/ may be respectively left and right views to be viewed simultaneously by the viewer.

Other implementations of the invention relate to multi-viewer operation. The first and second views which are collected in step /3/ are then adapted for a multi-viewer configuration of the autostereoscopic display unit. In such implementations, each viewing unit is a separate viewer, and all viewers are situated simultaneously in a viewing field of the display unit.

In preferred implementations, step /1/ may comprise capturing at least one image of the viewing field existing in front of the display unit. Then, the respective three-dimensional positions of the viewing units within the viewing field may be derived from a detection of these viewing units which is performed within the at least one image.

The invention also proposes an autostereoscopic display device which comprises:
- an autostereoscopic display unit;
- means for determining respective three-dimensional positions of one or several viewing units situated in a viewing field existing in front of the display unit, with respect to this display unit;
- means for determining a view map respectively for each one of the viewing units based on the three-dimensional position of this viewing unit, the view map containing pixels of the display unit which are viewed by the viewing unit considered;
- means for collecting one first view intended to a first one of the viewing units and one second view intended to a second one of the viewing units, which are to be displayed simultaneously and each being comprised of display values respectively for at least some of the pixels of the display unit;
- a view multiplexor, which is adapted for assigning the first view to the view map determined for the first viewing unit, and the second view to the view map determined for the second viewing unit; and
- an autostereoscopic controller, which is adapted for having the display unit displaying simultaneously a first position-adapted view comprised of the first view assigned to the view map determined for the first viewing unit, together with a second position-adapted view comprised of the second view assigned to the view map determined for the second viewing unit.

An advantage of the invention is that it is compatible with both active and passive autostereoscopic display units. In case of active autostereoscopic display units, there is no need to change the setting of the autostereoscopic system when the viewer's position varies. Indeed, the pixel selection used for displaying each view is adapted in real time just by digital pixel handling. In this way, the latency due to the operation of the active autostereoscopic system is avoided.

For three-dimensional stereoscopic rendering, the means for determining the respective three-dimensional positions of the viewing units are adapted for determining the respective three-dimensional positions of left and right eyes of one viewer.

For the applications relating to multi-viewer operation of the display device, the means for determining the respective three-dimensional positions of the viewing units are adapted for determining the three-dimensional positions respectively for faces of several viewers.

In preferred embodiments of the autostereoscopic display device of the invention, the means for determining the respective three-dimensional positions of the viewing units may comprise:
- at least one camera, which is arranged for capturing at least one image of the viewing field;
- detection means, which are adapted for determining the respective locations of the viewing units within each captured image; and
- means for deriving the respective three-dimensional positions of the viewing units within the viewing field, based on the locations of these viewing units within the at least one captured image.

### -- BRIEF DESCRIPTION OF THE DRAWINGS --

Figure 1 is a general view of an autostereoscopic display device according to the invention; and
Figure 2 is a block diagram of a display controller adapted for supplying views to an autostereoscopic display unit, by implementing a method according to the invention.

### -- DETAILED DESCRIPTION OF THE INVENTION --

For exemplifying purpose, the invention is now described in detail for the particular application of stereo images using a 2-view display.

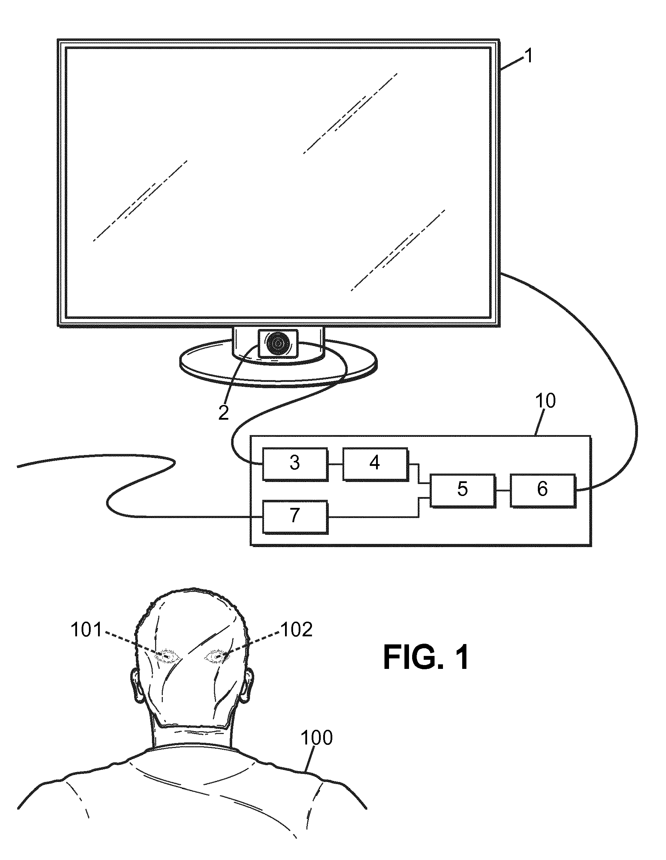

According to Figure 1, an autostereoscopic display device suitable for implementing the invention may comprise an autostereoscopic display unit 1, at least one camera 2 and a display controller 10. Reference numbers 100, 101 and 102 respectively denote a viewer of the display unit, his left eye and his right eye.

The autostereoscopic display unit 1 may be of any type existing before the present invention. In particular, it may be based on a parallax barrier or lenticular sheet.

The camera 2 is arranged for imaging a viewing field existing in front of the display unit 1, where the viewer 100 should be located for performing good viewing experience. Actually, the camera 2 is intended for determining the position of each of the viewer's eyes 101 and 102 within the viewing field, in terms of a viewing direction at least with an azimuth value and a viewing distance. Preferably, all three-dimensional coordinates for each eye 101, 102 are obtained. In some invention embodiments, the camera 2 may be replaced by two or more cameras arranged with a separating distance between each other, and controlled for capturing several images suitable for determining the respective three-dimensional coordinates of both eyes 101 and 102. Any other system also suitable for characterizing the respective positions of the viewing units within the viewing field may be used alternatively, e.g. infrared detectors or ultrasonic sensors.

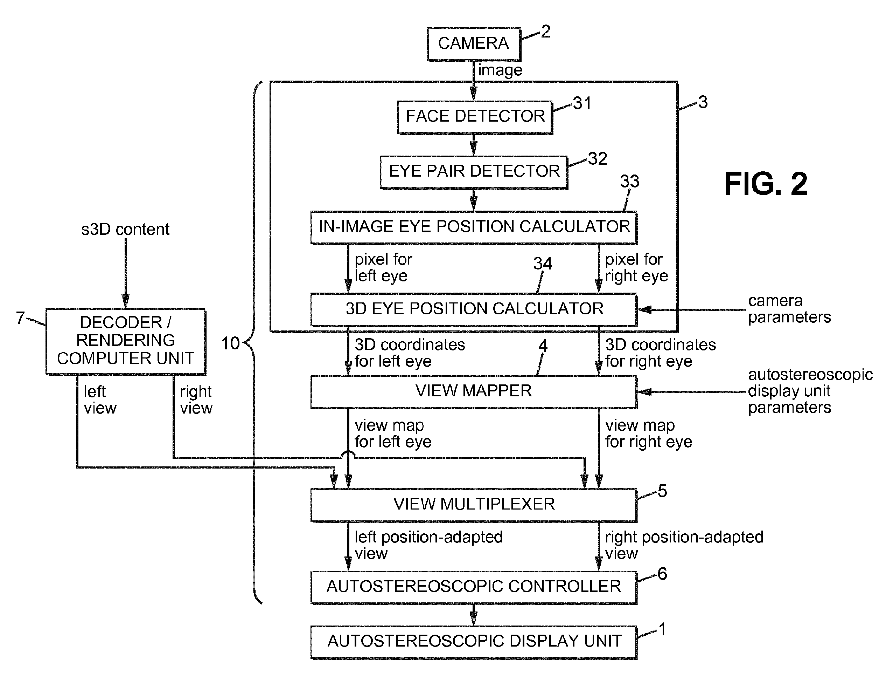

The display controller 10 contains at least the modules 3 to 7 which are described now with reference to Figure 2.

A stereo content, forming for example a three-dimension rendered image and denoted "s3D content", is received by a decoder 7, possibly in form of a transmission stream with suitable format. The s3D content may be of any type, including still image, video, graphics, etc. The decoder 7 may be combined with a rendering computer unit suitable for outputting left and right views corresponding to the s3D content. The left and right views which are thus supplied are to be displayed simultaneously using the autostereoscopic display unit 1 for achieving three-dimensional stereo rendering to the viewer 100.

Independently from such supply of the left and right views, the camera 2 provides at least one image of the viewer 100 within the viewing field to an eye-position computing unit 3. The unit 3 may have any hardware and/or software structure known in the art for outputting the three-dimensional coordinates of each of the viewer's eyes 101 and 102. These coordinates indicate the location of each eye within the viewing field, with respect to the display unit 1. For example, the unit 3 may be comprised of the following modules which are operating in series:
- a face detector 31 which searches for the viewer's face in the image captured by the camera 2;
- an eye pair detector 32 which identifies the eye pair pattern within the imaged viewer's face;
- an in-image eye position calculator 33 which extracts the coordinates of each eye in the image in terms of pixel coordinates, namely column and row numbers within a matrix of the image for the left viewer's eye 101, and similar for the right viewer's eye 102; and
- a three dimensional eye position calculator 34, suitable for converting the in-image coordinates of each eye 101, 102 into the three-dimensional coordinates of the eye position within the viewing field.

The calculator 34 may also be fed with parameters of the camera 2, including camera position parameters and camera optical parameters. In particular, the focal length and the direction of the optical axis of the camera 2 may be provided to the calculator 34. The three-dimensional coordinates of each eye 101, 102 are obtained by combining the in-image location of the eye with the camera parameters, in a manner which is known per se. Calibration of the camera 2 may be necessary for obtaining accurate values for the three-dimensional coordinates, including calibration of image distortion.

The calculator 34 may operate in particular by assuming that the actual separating distance between both eyes 101 and 102 is constant for any viewer, of about 6.5 cm (centimeter). Then, the viewing distance existing for the viewer 100 can be derived from the intra-ocular distance as appearing in the captured image. The viewing direction for the viewer 100 may be obtained from the orientation and length of the in-image separating gap measured between the imaged viewer and a center point of the image. Triangulation may be used alternatively.

Then, the three-dimensional coordinates obtained for the left eye 101 and those for the right eye 102 are fed into a view mapper 4. The view mapper 4 together with the view multiplexer 5 are core modules of the display controller 10 for implementing the invention.

The view mapper 4 selects those of the pixels of the display unit 1 which are actually viewed by the left viewer's eye 101, based on the location of this left eye as identified by its three-dimensional coordinates within the viewing field. This selection is called view map produced for the left eye 101. Same pixel selection is carried out for the right viewer's eye 102, resulting in another view map produced for the right eye 102. Because the left eye 101 and the right eye 102 are not at a same location in the viewing field, both view maps respectively for the left eye 101 and the right eye 102 are different from each other.

In the context of the present invention, pixel preferably denotes an image point which may be comprised itself of one or several color display components. Avoiding color alteration for each view which is associated with one of the view maps may be performed by selecting pixels which are partial or complete with respect to the color information, depending on the physical layout of the color components relatively to the autostereoscopic panel.

View mapping for each eye may be performed in several ways, but it may be based conceptually on a light-ray tracing from the eye position within the viewing field to the pixels of the display unit 1.

In a first manner, the physical and optical characteristics of the autostereoscopic display unit 1 are known initially, so that a transfer function can be derived which connects each pixel of the display unit 1 to any point within the viewing field. Then the view map for a selected point in the viewing field can be defined as the set of all pixels for which light originating from any one of these pixels reaches the selected point.

In a second manner, the view map may be determined for a selected point in the viewing field by capturing a picture of the panel of the display unit 1 using an image capturing device which is located at the point selected. Then the pixels of the display unit 1 which pertain to the view map can be identified from the captured picture. View maps are determined in this manner respectively for a dense number of selected points distributed throughout the viewing field. View maps for other points intermediate between selected ones may be obtained by interpolation.

A third manner for determining the view maps combines both previous ones. An initial generic transfer function may be parameterized and refined by implementing a measurement and calibration step, using pictures captured from several points distributed in the viewing field.

Then, the view multiplexer 5 assigns the left view received from the decoder 7 to the view map produced for the left viewer's eye 101. This view assignment can be performed in a pixel wise manner, by assigning the pixel display values read from the left view to the pixels of the view map relating to the left eye. Same operation is performed in parallel for the right eye 102, using the right view from the decoder 7 together with the view map produced for the right viewer's eye.

Three situations may occur for one pixel of the display unit 1:
/i/ first, the pixel pertains to only one of the view maps. Then, there is no ambiguity in assigning a display value to this pixel, by picking up this value from the view which is associated with this view map;
/ii/ in a second situation, the pixel does not pertain to either of the view maps so that it remains unfilled. Then the pixel may be filled by copy, extension or interpolation from one or several neighbouring pixels. In this way, the solution provided by the invention is more tolerant with respect to a small displacement of the eye since its coordinates have been determined last, and with respect to eye tracking imprecision; and
/iii/ in a third situation, the pixel may pertain to both view maps. In such conflict case, several strategies may be implemented:
   - always selecting a same one of the eyes for assigning the pixel to the corresponding view map;
   - selecting the eye for which the transfer function of the display unit has the largest amplitude at that point;
   - using an interpolation or averaging calculation, possibly with weighting parameters, for the display value to be assigned to the pixel, from the respective values read from both views.

Thus, the view multiplexer 5 outputs a left position-adapted view and a right position-adapted view, each within the corresponding view map and possibly further completed or corrected in accordance with cases /ii/ and /iii/. These position-adapted views are merged within a common image frame of the format implemented by the display unit 1. This step is performed by the autostereoscopic controller 6 in accordance with the stereo image transmission mode used for the autostereoscopic display unit 1. Some existing display units directly display the image on the physical panel. Then, the complete image as resulting from the merging of the position-adapted views can be displayed using a pixel-by-pixel addressing. Other autostereoscopic display units are to be supplied with partitioned views, for example left and right views in side-by-side or top-and-bottom format. In such cases, partitioned views in appropriate format are created from the complete image as resulting from the merging of the position-adapted views.

The image as resulting from the invention implementation can be transmitted between the controller 6 and the display unit 1 using any existing physical connection support and protocol such as HDMI, DSI, DVI, DisplayPort, etc.

Due to the implementation of the view mapper 4 and the view multiplexer 5, the invention method allows experiencing s3D autostereoscopic viewing in an improved manner, because each eye sees a respective view which is devoid of mixing or inversion with the other view, within an increased space range for the viewer's position in the viewing field.

Although the invention has been described in detail for the particular application of stereo images using a 2-view display, and for three-dimensional image rendering, it may be applied similarly to multi-viewer display. For such other applications, the views supplied by the decoder 7 are respectively intended to several viewers all situated in the viewing field of the display unit 1. The assignment view-to-viewer replaces that view-to-eye of the stereo application. Both eyes of each wearer may be supplied with a common view, and different views are intended to distinct viewers. Then, the viewing direction of each viewer is determined separately based on the image captured by the camera 2, and the view which is intended to one of the viewers is assigned to the view map produced for the viewing direction of this viewer. Such multi-viewer display implementing the invention may not be limited to 2-view display, but it may be operated with more than two viewers, for example three or four viewers.

## Claims

1. Method for supplying views which are intended respectively to one or several viewing units viewing simultaneously a same autostereoscopic display unit (1), comprising the following steps:
/1/ determining current respective three-dimensional positions of the viewing units (101, 102) with respect to the display unit (1);
/2/ for each viewing unit (101, 102) and based on the three-dimensional position of the viewing unit, determining a view map containing pixels of the display unit (1) which are viewed by said viewing unit;
/3/ collecting one first view intended to a first one of the viewing units (101) and one second view intended to a second one of the viewing units (102), first and second views to be displayed simultaneously and each comprised of display values respectively for at least some of the pixels of the display unit (1);
/4/ multiplexing the first view and the second view so that said first view is assigned to the view map determined for the first viewing unit (101) and said second view is assigned to the view map determined for the second viewing unit (102); and
/5/ using the display unit (1), displaying simultaneously a first position-adapted view comprised of the first view assigned to the view map determined for the first viewing unit (101), together with a second position-adapted view comprised of the second view assigned to the view map determined for the second viewing unit (102).

2. Method according to Claim 1, wherein the first (101) and second (102) viewing units are respectively left eye and right eye of one viewer (100), and the first and second views collected in step /3/ are respectively left and right views to be viewed simultaneously by the viewer for three-dimensional stereoscopic rendering.

3. Method according to Claim 1, wherein the first and second views collected in step /3/ are adapted for a multi-viewer configuration of the autostereoscopic display unit (1), and the viewing units are separate viewers situated simultaneously in a viewing field of the display unit.

4. Method according to any one of Claims 1 to 3, wherein step /1/comprises capturing at least one image of a viewing field existing in front of the display unit (1), and deriving the respective three-dimensional positions of the viewing units (101,102) within the viewing field from a detection of said viewing units performed within said at least one image.

5. Autostereoscopic display device comprising:
- an autostereoscopic display unit (1);
- means (3) for determining respective three-dimensional positions of one or several viewing units (101, 102) situated in a viewing field existing in front of the display unit (1), with respect to said display unit;
- means (4) for determining a view map respectively for each one of the viewing units (101, 102) based on the three-dimensional position of said viewing unit, said view map containing pixels of the display unit (1) which are viewed by said viewing unit;
- means (7) for collecting one first view intended to a first one of the viewing units (101) and one second view intended to a second one of the viewing units (102), first and second views to be displayed simultaneously and each comprised of display values respectively for at least some of the pixels of the display unit;
- a view multiplexor (5) adapted for assigning the first view to the view map determined for the first viewing unit (101) and the second view to the view map determined for the second viewing unit (102); and
- an autostereoscopic controller (6) adapted for having the display unit (1) displaying simultaneously a first position-adapted view comprised of the first view assigned to the view map determined for the first viewing unit (101), together with a second position-adapted view comprised of the second view assigned to the view map determined for the second viewing unit (102).

6. Autostereoscopic display device according to Claim 5, wherein the means (3) for determining the respective three-dimensional positions of the viewing units (101, 102) are adapted for determining the respective three-dimensional positions of left and right eyes of one viewer (100).

7. Autostereoscopic display device according to Claim 5, wherein the means (3) for determining the respective three-dimensional positions of the viewing units (101, 102) are adapted for determining the three-dimensional positions respectively for faces of several viewers.

8. Autostereoscopic display device according to any one of Claims 5 to 7, wherein the means for determining the respective three-dimensional positions of the viewing units (101,102) comprise:
- at least one camera (2) arranged for capturing at least one image of the viewing field;
- detection means (31-33) adapted for determining respective locations of the viewing units (101, 102) within each captured image; and
- means (34) for deriving the respective three-dimensional positions of the viewing units (101, 102) within the viewing field, based on the locations of said viewing units within the at least one captured image.
